(19) Europäisches Patentamt
European Patent Office
Office européen des brevets

(11) EP 4 502 060 A1

# (12) EUROPEAN PATENT APPLICATION

published in accordance with Art. 153(4) EPC

(43) Date of publication:
**05.02.2025 Bulletin 2025/06**

(21) Application number: **23780114.7**

(22) Date of filing: **24.03.2023**

(51) International Patent Classification (IPC):
***C08L 67/00*** *(2006.01)* ***C08K 5/524*** *(2006.01)*
***C08L 67/04*** *(2006.01)* ***C08L 85/02*** *(2006.01)*
***D01F 6/62*** *(2006.01)* ***D01F 6/92*** *(2006.01)*

(52) Cooperative Patent Classification (CPC):
**C08K 5/524; C08L 67/00; C08L 67/04; C08L 85/02; D01F 6/62; D01F 6/92**

(86) International application number:
**PCT/JP2023/011698**

(87) International publication number:
**WO 2023/190104 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022 JP 2022053233**

(71) Applicant: **TEIJIN FRONTIER CO., LTD.**
**Osaka-shi, Osaka 530-0005 (JP)**

(72) Inventors:
- **IWAI, Masahiro**
  **Osaka-shi Osaka 530-0005 (JP)**
- **SUMITOMO, Ryuhei**
  **Osaka-shi, Osaka 530-0005 (JP)**
- **YONEDA, Hiroyuki**
  **Osaka-shi, Osaka 530-0005 (JP)**

(74) Representative: **Carpmaels & Ransford LLP**
**One Southampton Row**
**London WC1B 5HA (GB)**

## (54) MARINE DEGRADABLE POLYESTER RESIN COMPOSITION, MOLDED BODY MADE THEREOF AND METHOD FOR PRODUCING SAME

(57) The marine degradable polyester resin composition of the invention is a resin composition mainly containing polyester, and contains a phosphorus acid ester-based degradation accelerator, in which the phosphorus acid ester-based degradation accelerator is a compound represented by Chemical Formula (I) described below. Further, it is preferable that the phosphorus acid ester-based degradation accelerator is dialkyl pentaerythritol diphosphite, the polyester resin composition is aliphatic polyester, or the polyester resin composition is poly-L-lactic acid or poly-D-lactic acid with an optical purity of 90% or more. In addition, the polyester-based resin molded product of the invention contains the marine degradable polyester resin composition described above.

EP 4 502 060 A1

## Description

Technical Field

The present invention relates to a marine degradable polyester resin composition and a molded product made thereof.

Background Art

Various plastics such as bottles and fiber waste are discharged into the ocean, and cause a concern that such plastics not only affect the ecosystem, but also affect humans through bioaccumulation in recent years. For example, there have been many cases of ghost fishing (accidental ingestion or entanglement in the body) of marine organisms (marine mammals, sea turtles, seabirds, fishes, and the like). The plastics are crushed and atomized in the natural environment as a stage prior to degradation, but some marine organisms accidentally ingest or absorb the atomized plastics by mistaking the plastics for plankton, which not only inhibits nutrient absorption, but also may even kill the marine organisms. In addition, the plastics may be incorporated in the ecological chain by adsorbing harmful substances, and thus, there has also been a concern for the subsequent influence on humans through the bioaccumulation.

In order to prevent such problems, various efforts such as charging for plastic bags have been implemented, but which is not sufficient to prevent the problems.

As an approach to the problems from the perspective of materials, the development of marine degradable plastics, which are alternative materials quickly degraded in the ocean, has been attracting attention. For example, there is a private association working by presenting "plastics having a degradation rate of 90% in the marine water at 30°C for 6 months", as an index for the marine degradable plastics.

However, it is more difficult to improve the "degradation rate in the marine water at 30°C" than to improve degradability in the soil or the compost. This is because adverse conditions in the ocean, such as a lack of bacteria degrading plastics and a low oxygen concentration in the ocean, overlap.

Further, as such a resin degradable in the ocean, only a copolymerized resin with a 3-hydroxybutyric acid-3-hydroxyhexanoic acid as a monomer, a starch-based polymer, or the like is known. Although it has been found that many biodegradable polymers are degradable in the soil or the compost, high degradability in water, even in the marine water, is still a major issue.

In particular, it has been difficult to improve the marine degradability of a polyester resin, which is excellent in physical properties and versatility and has been widely used as film, fiber, an injection-molded product, and the like.

For example, a polylactic acid that is one type of polyester resin contains lactic acid obtained from a plant-derived raw material, or a derivative thereof, as a raw material, and thus, is known as an environment-friendly polymer material having soil degradability.

However, polylactic acid, in particular, a homopolymer thereof has high crystallinity and a high glass transition point, and has low degradability in water or an enzyme, and thus, has a low degradation speed in the natural environment. Such aliphatic polyester can be comparably promptly hydrolyzed in a high-temperature environment such as the compost. However, in particular, a polymer with a high molecular weight is not easily degraded in water or in the marine water at a low temperature of approximately 30°C.

Therefore, in PTL 1, a method for adding organic carboxylic acid and organic carboxylate to polylactic acid to accelerate degradation is disclosed. However, a degradation speed in an 80°C × 90%RH environment is improved, but a degradation speed in an environment where a decrease in a molecular weight hardly occurs, such as in the marine water at 30°C, is not sufficient. In PTL 2, a composition obtained by blending a copolymer of malic acid or asparagic acid and polylactic acid with polylactic acid is proposed. However, a prompt weight decrease is observed in a high-temperature alkaline environment, but such an effect is significantly reduced in the neutral environment of PH 7.4.

A polyester composition having high biodegradability even in an anaerobic environment with few bacteria, such as in the marine water at 30°C, has not been found yet.

Citation List

Patent Literature

PTL 1: JP2002-256142A
PTL 2: WO2018/079662

Summary of Invention

Technical Problem

The invention solves the above problems of the related art to provide a marine degradable polyester resin composition that is promptly degraded even in the marine water at a low temperature.

Solution to Problem

The marine degradable polyester resin composition of the invention is a resin composition mainly containing polyester, and contains a phosphorus acid ester-based degradation accelerator, in which the phosphorus acid ester-based degradation accelerator is a compound represented by General Formula (I) described below.

[Chemical Formula 1]

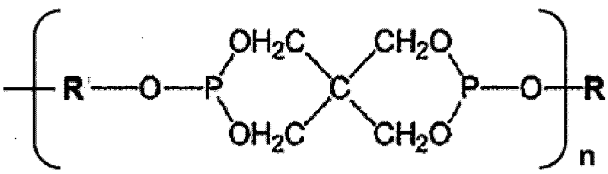

... General Formula (I)

(In General Formula (I), R's are an alkyl group or an aryl group, or a hydrogenated bisphenol A skeleton, and may be identical to or different from each other. n is an integer in a range of 1 to 20.)

Further, it is preferable that the phosphorus acid ester-based degradation accelerator is dialkyl pentaerythritol diphosphite, the polyester resin composition is aliphatic polyester, or the polyester resin composition is poly-L-lactic acid or poly-D-lactic acid with an optical purity of 90% or more. In addition, it is preferable that a number average molecular weight of the resin composition is 50,000 or more, an acid value of the resin composition is 300 eq/ton or less, or a content of the phosphorus acid ester-based degradation accelerator is 0.01 to 5% by mass.

In addition, another polyester-based resin molded product of the invention contains the marine degradable polyester resin composition described above. Further, it is preferable that a storage strength retention rate of the resin molded product on land after 5 months is 60% or more, a shape of the polyester resin molded product is fiber or film, or in a case where the shape is fiber, an initial strength of the fiber is 1.5 cN/dtex or more.

A masterbatch of another polyester-based resin composition of the invention is the marine degradable polyester resin composition described above, in which the content of the phosphorus acid ester-based degradation accelerator is 5 to 20% by mass. Alternatively, a method for producing a polyester-based resin molded product includes adding the masterbatch to a polyester-based resin, and performing melt molding. Further, it is preferable that a shape of the polyester-based resin molded product is fiber or film.

Advantageous Effects of Invention

According to the invention, the marine degradable polyester resin composition that is promptly degraded even in the marine water at a low temperature is provided.

Description of Embodiments

Hereinafter, an embodiment of the invention will be described in detail.

The marine degradable polyester resin composition of the invention is a resin composition mainly containing polyester. Here, mainly indicates that the content of a constituent component is 50% by mass or more based on the total content, and a polyester resin having a main component of which the content is 70% by mass or more, in particular, 90% by mass or more and 100% by mass or less is preferable.

Examples of the polyester resin include a polymer or a copolymer obtained by polycondensing one or more types selected from dicarboxylic acid or an ester-forming derivative thereof, diol or an ester-forming derivative thereof, hydroxycarboxylic acid or an ester-forming derivative thereof, and lactone. Polyester containing hydroxycarboxylic acid or an ester-forming derivative thereof is preferable, and aliphatic polyester containing hydroxycarboxylic acid or an ester-forming derivative thereof is more preferable.

Here, for hydroxycarboxylic acid or an ester-forming derivative, and lactone, which are preferred constituent components of the polyester of the invention, examples of hydroxycarboxylic acid include glycolic acid, lactic acid,

hydroxypropionic acid, hydroxybutyric acid, hydroxyvaleric acid, hydroxycaproic acid, hydroxybenzoic acid, p-hydroxybenzoic acid, 6-hydroxy-2-naphthoic acid, ester-forming derivatives thereof. Examples of lactone include caprolactone, valerolactone, propiolactone, undecalactone, 1,5-oxepan-2-one.

Examples of a polymer containing the preferred aliphatic hydroxycarboxylic acid as a main constituent component include a polycondensate, a copolymer of glycolic acid, lactic acid, hydroxypropionic acid, hydroxybutyric acid, hydroxyvaleric acid, hydroxycaproic acid, and the like. Among them, preferred examples include polyglycolic acid, polylactic acid, poly3-hydroxycarboxylic butyric acid, poly4-polyhydroxybutyric acid, poly3-hydroxyhexanoic acid, polycaprolactone, and copolymers thereof. In particular, poly-L-lactic acid, poly-D-lactic acid, stereocomplex polylactic acid, racemic polylactic acid, and the like are preferable.

Further, it is particularly preferable that the polyester of the invention is aliphatic polyester, and aliphatic polyester is at least one type selected from the group consisting of poly-L-lactic acid, poly-D-lactic acid, racemic polylactic acid, and polyglycolic acid.

Note that, dicarboxylic acid or an ester-forming derivative thereof and diol or an ester-forming derivative thereof, which can be the constituent components of the polyester resin of the invention, will be further described below.

Examples of dicarboxylic acid or an ester-forming derivative include aromatic dicarboxylic acid such as terephthalic acid, isophthalic acid, and 2,6-naphthalene dicarboxylic acid, aliphatic dicarboxylic acid such as oxalic acid, succinic acid, and adipic acid, or alicyclic dicarboxylic acid such as 1,4-cyclohexane dicarboxylic acid. Alternatively, ester-forming derivatives of such dicarboxylic acid are preferable.

In addition, examples of diol and an ester-forming derivative thereof include aliphatic glycol having 2 to 20 carbon atoms, such as ethylene glycol and 1,3-propanediol, long-chain glycol having a molecular weight of 200 to 100,000, such as polyethylene glycol and poly1,3-propylene glycol, and an aromatic dioxy compound such as hydroquinone and bisphenol A, or ester-forming derivatives of such diol.

The constituent components of polyester, described above, can be used as not only the constituent component of polyester that is a main component, but also as a copolymerized component that is a sub-component. In this case, the copolymerized component other than the polyester component that is the main component is preferably in a range of 0 to 10% by mol, more preferably in a range of 0 to 5% by mol, and particularly preferably in a range of 0 to 2% by mol, on the basis of the total repeating units of polyester.

It is preferable that the polyester of the invention mainly contains the components described above, and from the viewpoint of controlling degradability in water at a low temperature, it is also preferable to use two or more types of aliphatic polyester in combination. In particular, it is preferable that polylactic acid is the main component, and a combination between polylactic acid and polyglycolic acid is particularly preferable as the combination. In this case, polylactic acid that is the main component is preferably 50% or more of the total mass, and from the viewpoint of easily controlling the degradability, is more preferably 70% by mass or more, and particularly preferably 80% by mass or more and less than 100%. Here, polylactic acid has a main chain containing a lactic acid unit, and a lactic acid monomer contributing to the configuration is preferably at a ratio of 90 to 100% by mol of the monomer configuring polylactic acid, more preferably at a ratio of 95 to 100% by mol, and even more preferably at a ratio of 98 to 100% by mol.

However, the lactic acid unit includes a L-lactic acid unit and a D-lactic acid unit, which are optical isomers to each other, and in a case where the main polyester of the invention is polylactic acid, it is preferable that the main chain is mainly a combination between the L-lactic acid unit and the D-lactic acid unit. As described above, by using a polylactic acid resin in which the L-lactic acid unit and the D-lactic acid unit coexist, it is possible to further improve the degradability at a low temperature. A ratio of the other lactic acid unit to the lactic acid unit that is a main unit is preferably 20% by mol or less. The ratio is more preferably 0.1 to 15% by mol, and even more preferably 1 to 15% by mol. In a case where either of the units does not exist, the degradability in water at a low temperature may decrease. On the other hand, in a case where either of the units excessively exists, the crystallinity of polylactic acid is lost, and thus, there is a possibility that the degradability in water at a low temperature is improved, but it may be difficult to perform processing to fiber or various molded bodies.

Note that, in the invention, it is preferable to use polylactic acid having a high ratio of the L-lactic acid unit. In addition, the content rate of the L-lactic acid or the D-lactic acid, which is the main component, in the polylactic acid resin is generally referred to as an optical purity, and the optical purity is preferably a ratio of 90% or more, more preferably a ratio of 95% or more, and even more preferably a ratio of 98 to 100%.

Further, in the marine degradable polyester resin composition of the invention, the number average molecular weight of the resin composition is preferably 50,000 or more. The number average molecular weight is more preferably in a range of 60,000 to 120,000, and particularly preferably in a range of 6,5000 to 10,0000. According to such a range, it is possible to obtain the polyester resin composition with high initial physical properties and high marine degradability. Here, the number average molecular weight is a value obtained by performing measurement with gel permeation chromatography (GPC) and converting the measured value in terms of standard polystyrene.

In order to make the mechanical properties and the moldability of a molded product to be finally obtained compatible, the weight average molecular weight of the polyester used is preferably 30,000 to 500,000. The weight average molecular weight is more preferably in a range of 50,000 to 350,000, and particularly preferably in a range of

100,000 to 250,000.

In addition, in the marine degradable polyester resin composition of the invention, the acid value of the resin composition is preferably 300 eq/ton or less. The acid value of the resin composition is more preferably in a range of 10 to 250 eq/ton, and particularly preferably in a range of 20 to 200 eq/ton.

Additionally, in a polyester-based resin molded product containing another marine degradable polyester resin composition of the invention described below, the acid value of the molded product is preferably 100 eq/ton or less. The acid value of the molded product is more preferably in a range of 10 to 75 eq/ton, and particularly preferably in a range of 15 to 50 eq/ton.

According to such a range, the polyester resin composition of the invention can be the polyester resin composition with high initial physical properties and high marine degradability.

Such polyester can be produced by a known method of the related art. For example, in a case where polyester is polylactic acid, polylactic acid can be produced by a production method for performing ring-opening polymerization on L-lactide, D-lactide, or a mixture thereof in the presence of a metal-containing catalyst, a method for performing solid state polymerization on low-molecular-weight polylactic acid containing a metal-containing catalyst, or a direct polymerization method for performing dehydration-condensation on lactic acid.

The marine degradable polyester resin composition of the invention contains a phosphorus acid ester-based degradation accelerator, and the phosphorus acid ester-based degradation accelerator is a compound having a molecular formula represented by General Formula (1) described below.

[Chemical Formula 2]

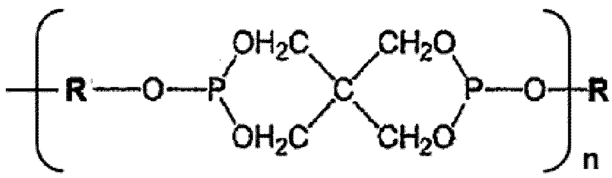

... General Formula (I)

(In General Formula (I), R's are an alkyl group or an aryl group, or a hydrogenated bisphenol A skeleton, and may be identical to or different from each other. n is an integer in a range of 1 to 20.)

As phosphorus acid esters that are such a compound, a compound having a pentaerythritol diphosphite component is preferable, and among them, dialkyl pentaerythritol diphosphite is preferable. More specifically, examples thereof include distearyl pentaerythritol diphosphite, diisodecyl pentaerythritol diphosphite, bis(2,4-di-t-butyl phenyl) pentaerythritol diphosphite, bis(2,4-di-t-butyl-6-methyl phenyl) pentaerythritol diphosphite, bis(2,6-di-t-butyl-4-methyl phenyl) pentaerythritol diphosphite, bis(2,4,6-tri-t-butyl phenyl) pentaerythritol diphosphite, a mixture thereof.

Among them, examples of the compound having a pentaerythritol diphosphite component that is generally used may include distearyl pentaerythritol diphosphite, bis(2,6-di-t-butyl-4-methyl phenyl) pentaerythritol diphosphite, tetrakis(2,6-di-t-butyl phenyl) 4,4'-biphenylene phosphite, a hydrogenated bisphenol A-pentaerythritol phosphite polymer.

Among them, it is necessary to have appropriate thermal resistance as the phosphorus acid esters used in the invention, and thus, dialkyl pentaerythritol diphosphite is preferable. Among them, a compound having 8 to 36 carbon atoms as the alkyl group is preferable. A compound having 10 to 24 carbon atoms is more preferable, and in particular, distearyl pentaerythritol diphosphite having 18 carbon atoms is most preferable. In a case where the number of carbon atoms of the alkyl group is excessively small, the phosphorus acid esters tend to be a liquid easily and to have poor handleability. From the viewpoint of easy handleability, in general, solid phosphorus acid esters are preferable.

Note that, in a case where the phosphorus acid esters contain a bisphenol A-based component in a portion other than pentaerythritol diphosphite, the thermal resistance tends to decrease, and for example, a thread break or the like tends to easily occur in a spinning step for making fiber, and the like. In addition, in a case where a phenolic component is contained, it is easy to improve the thermal resistance, but the marine degradability tends to be inhibited. Further, it is also concerned that phosphorus acid esters containing the bisphenol A-based or phenolic component have chronic aquatic environmental toxicity.

In addition, as the phosphorus acid ester-based degradation accelerator used in the invention, the thermal degradation temperature thereof is preferably 170°C or higher. The range of the thermal degradation temperature is preferably 400°C or lower, and more preferably 200 to 350°C. Here, the thermal degradation temperature is a temperature at which the weight is decreased by 5% or more. According to such a high thermal degradation temperature, the degradation is less likely to occur in the subsequent processing step such as fiber molding or film molding, and high initial physical properties can be retained.

The marine degradable polyester resin composition of the invention is the resin composition mainly containing polyester, and contains the phosphorus acid ester-based degradation accelerator described above.

In addition, the added amount of the phosphorus acid ester-based degradation accelerator in the resin composition is preferably 0.01% by mass or more, and more preferably 0.01 to 5% by mass. Furthermore, a range of 0.1 to 2% by mass is preferable, and a range of 0.3 to 1% by mass is particularly preferable. In a case where the added amount of such an accelerator is excessively small, the effect of increasing the degradation speed decreases, and in a case where the added amount is excessively large, the moldability tends to deteriorate, or the thermal stability tends to deteriorate.

Note that, the preferred added amount can be defined in terms of the amount of phosphorus atoms, and the concentration of the phosphorus atoms in the resin composition is preferably in a range of 0.001% by mass or more, and more preferably in a range of 0.01 to 1.0% by mass. Furthermore, a range of 0.02 to 0.4% by mass is preferable, and a range of 0.03 to 0.2% by mass is particularly preferable. In a case where the added amount of such an accelerator is excessively small, the effect of increasing the degradation speed decreases, and in a case where the added amount is excessively large, the moldability tends to deteriorate, or the thermal stability tends to deteriorate.

Further, in the marine degradable polyester resin composition of the invention, within a range not impairing the effect of the invention, any known additives and fillers can be added and used. For example, it is preferable to contain a filling agent, a mold release agent, an antistatic agent, a plasticizer, an impact resistance improvement agent, and the like.

In such a marine degradable polyester resin composition of the invention, the marine degradability at a low temperature is excellent, and the monomer components, and the like are less likely to have an adverse impact on the marine ecosystem or other environment even during the degradation.

In addition, the marine degradable polyester resin composition of the invention is excellent in hydrolyzability, and thus, in particular, in a case where the polyester component is polylactic acid, the number average molecular weight of polylactic acid is promptly and considerably decreased in the initial stage by hydrolysis, and the subsequent microbial degradation is accelerated.

Incidentally, the degradation mechanism of polylactic acid is different from that of other biodegradable plastic, and it is known that the degradation mechanism progresses in two stages/two modes in which the molecular weight is decreased by the hydrolysis, and then, polylactic acid is finally completely degraded into carbon dioxide and water by microorganism. For example, it is expected that the microbial degradation is accelerated by decreasing the number average molecular weight of polylactic acid to 20000 in the early stage.

Such a marine degradable polyester resin composition of the invention is effectively degraded even in the ocean at a low temperature and a low oxygen concentration, other than the condition of a high temperature and a high oxygen concentration, such as the compost. The effect of the invention is remarkably exhibited at the ambient temperature in a range of 0 to 50°C, and a range of 5 to 35°C.

In such a marine degradable polyester resin composition of the invention, an increase rate in the number of main-chain breaks after dipping in the marine water at a low temperature (30°C) for 60 days is preferably 5 (eq/ton/Month) or more. The increase rate is more preferably in a range of 8 to 100 (eq/ton/Month), and particularly preferably in a range of 10 to 50 (eq/ton/Month) (here, Month (1 month) is set as 30 days).

In addition, it is preferable that the storage strength retention rate of the invention when used on land is high. More specifically, in the environment of room temperature of 25°C and humidity of 60%, the storage strength retention rate on land after 5 months (after 150 days) is preferably 60% or more. The storage strength retention rate is more preferably 80 to 100%, and particularly preferably 90 to 99%.

The polyester-based resin molded product of the invention contains such a marine degradable polyester resin composition of the invention. Further, melt molding is preferable as a molding method therefor.

As a preferred melt molding method, a known method such as injection molding, extrusion molding, vacuum molding, pressure molding, and blow molding can be used. In addition, examples of a shape after the molding may include a pellet, fiber, cloth, a fiber structure, film, a sheet, a sheet nonwoven fabric. Further, it is also preferable that a pellet, fiber, film, or the like is used as powder by the treatment such as pulverizing, disconnecting, and cutting.

In addition, such a molded product can be preferably used for electric and electronic parts such as various housings, toothed wheels and gears, building members, civil engineering members, agricultural materials, automobile parts (such as interior and exterior parts), daily parts, and the like.

In addition, the molded product is also preferably in the shape of fiber, and can be formed into fiber or a fiber structure by general melt spinning and the subsequent post-processing. A melting temperature is preferably in a range of 170 to 250°C, and particularly preferably in a range of 190 to 230°C. Furthermore, the fiber can be produced by being discharged from a melt spinneret as a monofilament, a multifilament, or the like, and can be formed into circular, variant, solid, or hollow fiber. Further, by drawing or the like, the initial strength of the fiber is preferably 1.5 cN/dtex or more. The initial strength is more preferably 2.0 to 5.0 cN/dtex. In this case, the single fiber fineness of the fiber is preferably in a range of 1 to 10 dtex, and more preferably in a range of 2 to 5 dtex.

As a method for producing the marine degradable polyester resin composition of the invention or the molded

product thereof, it is possible to prepare the resin composition by directly mixing the polyester resin composition that is a main component with the phosphorus acid ester-based degradation accelerator, and performing melt kneading, and it is also preferable to once prepare a masterbatch in which the content of the phosphorus acid ester-based degradation accelerator is 5 to 20% by mass.

That is, a masterbatch of the polyester-based resin composition of the invention contains the marine degradable polyester resin composition of the invention, in which the content of the phosphorus acid ester-based degradation accelerator is 5 to 20% by mass.

In addition, as the masterbatch, the acid value of the masterbatch is preferably 300 eq/ton or less. The acid value of the masterbatch is more preferably in a range of 10 to 250 eq/ton, and particularly preferably in a range of 20 to 200 eq/ton.

According to such a range, it is possible for the polyester resin composition obtained from the masterbatch, or the molded product thereof to have a suitable acid value. It is possible to obtain the polyester resin composition with high initial physical properties and high marine degradability.

Additionally, in the case of once preparing the masterbatch, it is possible to add the phosphorus acid ester-based degradation accelerator at a high concentration, and to suppress a decrease in the molecular weight of the polymer during kneading. It is preferable that a processing temperature during kneading is low, and the processing temperature is preferably in a range of 160 to 230°C. The processing temperature is more preferably in a range of 180 to 210°C. It is possible to suppress thermal deterioration in the processing or a decrease in the molecular weight of the polymer.

In addition, in the case of using the polymer that is a raw material, or the masterbatch as described above, it is preferable to adjust the moisture content of the polymer or the masterbatch by drying before the processing.

The drying temperature of the polymer that is the raw material is preferably in a range of 80 to 120°C, and the drying treatment time is preferably in a range of 4 to 12 hours. The drying treatment temperature is more preferably in a range of 90 to 110°C, and particularly preferably in a range of 95 to 105°C. The drying treatment time is preferably in a range of 6 to 10 hours, and particularly preferably in a range of 7 to 9 hours.

In addition, it is preferable to use a vacuum drier for drying the masterbatch, and it is possible to more effectively suppress the thermal degradation. The drying temperature is preferably in a range of 60 to 100°C, and the drying treatment time is preferably in a range of 4 to 10 hours. The drying treatment temperature is preferably in a range of 70 to 90°C, and particularly preferably in a range of 75 to 85°C. The drying treatment time is preferably in a range of 5 to 9 hours, and particularly preferably in a range of 6 to 8 hours.

According to such a drying step, it is preferable to adjust the amount of moisture of the polymer that is the raw material or the masterbatch to a range of 100 to 1000 ppm, and more preferably to a range of 50 to 500 ppm. By performing the processing in such an optimal condition, it is possible to more effectively suppress an increase in the acid value of the raw material or the masterbatch.

Examples of a kneading machine used in the subsequent step include a known uniaxial or multiaxial horizontal kneading machine such as an extruder and a kneader. It is preferable that the kneading temperature is low, and the rotation speed is preferably in a range of 600 rpm or less, and more preferably in a range of 100 to 400 rpm. In order to reduce the thermal deterioration, it is preferable to cool a discharged strand using water cooling.

The concentration of the degradation accelerator in the masterbatch is preferably in a range of 5 to 20% by mass, more preferably in a range of 5 to 15% by mass, and particularly preferably in a range of 5 to 10% by mass. In a case where the concentration is excessively high, the degradation accelerator may be precipitated depending on the solubility of the main component. The amount of phosphorus atoms in the masterbatch is preferably in a range of 0.1% by mass or more, more preferably in a range of 0.2 to 2% by mass, and particularly preferably in a range of 0.3 to 1% by mass.

As the method for producing a polyester-based resin molded product of the invention, one of the particularly preferred production methods is to add the masterbatch as described above to the polyester-based resin, and perform melt molding. The shape of the obtained polyester-based resin molded product can be various shapes as described above, and among them, the fiber or film shape is preferable.

## Examples

Hereinafter, the invention will be described in more detail by Examples. Note that, each item in Examples was measured by the following method.

### (1) Number Average Molecular Weight (Mn):

The number average molecular weight of a polymer was a value obtained by performing measurement with gel permeation chromatography (GPC), and converting the value in terms of standard polystyrene.

In the measurement, the following detector and column were used, chloroform was used as an eluent, and in the condition of a temperature of 40°C and a flow rate of 1.0 mL/min, 10 μL of a sample solution was injected to the column to

perform the measurement. As the sample solution, a solution obtained by dissolving a sample in chloroform such that the concentration was 2 mg/mL, and then, performing filtration with a PTFE membrane filter of 0.45 μm was used.

Detector; a differential refractometer (manufactured by Waters Corporation) "Waters2414".

Column Used; two "shodex GPC K-806L", manufactured by Showa Denko K.K., were connected in series.

(2) Measurement of Phosphorus (P) Concentration:

The phosphorus (P) concentration in the sample was measured by the following method.

200 mg of the sample was weighed into a degradation vessel, 7 mL of nitric acid was added thereto, and then, the vessel was sealed to perform degradation treatment using a wet degradation machine (manufactured by PerkinElmer, Inc., "Multiwave3000") in the condition of 700 W and 60 minutes. The P concentration of the liquid after the degradation treatment was measured using an ICP machine (manufactured by Agilent Technologies, Inc., "5100ICP-OES"). The P concentration was obtained from a calibration curve created using a commercially available phosphorus standard solution for ICP.

(3) Measurement of Acid Value

The sample was dissolved in purified o-cresol under nitrogen gas flow, and then, neutralization titration was performed with an ethanol solution of 0.05 N of potassium hydroxide using bromocresol blue as an indicator. This was converted as a numerical value (eq/ton) of the equivalent concentration of the total amount of a polymer-derived carboxyl group and a phosphorus acid, which is a degradation product of phosphorus acid ester, in $1 \times 10^6$ g (1 ton) of the sample.

(4) Increase Rate in Number of Main-Chain Breaks (Evaluation of Degradation in Low-Temperature Marine Water) :

For a powder-shaped resin composition, 100 mg of a powdered resin composition and 100 cc of the natural marine water (sampled at Matsuyama Port in Ehime Prefecture) were put in a screw tube bottle, and shaken at 30°C and 100 rpm for 60 days with a mixed rotor (Model: VMRC-5), manufactured by AS ONE CORPORATION. After 60 days, the resin composition was taken out, and filtered with filter paper (JIS, P3801:1995, Type 5 A-Standard), and the resin composition remaining on the filter paper was dried overnight at room temperature under vacuum of 133.3 Pa or less to measure a number average molecular weight with GPC. The number of main-chain breaks of the resin composition was measured using the obtained number average molecular weight, and an increase rate in the number of main-chain breaks was obtained by Mathematical Expressions 1 and 2 described below.

For a fiber-shaped resin composition, 5 g of a resin composition in the shape of a cylindrically-knitted fiber and 250 cc of the natural marine water (sampled at Matsuyama Port in Ehime Prefecture) were put in a screw tube bottle, and shaken at 30°C and 100 rpm for 60 days. After 60 days, the resin composition was taken out, and dried overnight with a vacuum drier to measure a number average molecular weight with GPC, and as described above, an increase rate in the number of main-chain breaks was obtained by Mathematical Expressions 1 and 2 described below.

[Mathematical Expression 1]

$$\text{Number of Main-Chain Breaks} = \frac{\text{1 ton}}{\text{Number Average Molecular Weight 2 Months after Hydrolysis Test}} - \frac{\text{1 ton}}{\text{Number Average Molecular Weight before Hydrolysis Test}} \quad \text{(Mathematical Expression 1)}$$

[Mathematical Expression 2]

$$\text{Increase Rate in Number of Main-Chain Breaks (eq/ton/month)} = \frac{\text{Number of Main-Chain Breaks}}{2} \quad \text{(Mathematical Expression 2)}$$

(5) Storage Fiber Strength on Land:

As the evaluation of hydrolysis resistance on land, storage was performed in the environment of room temperature of 25°C and humidity of 60%RH for 5 months, and a fiber strength was measured and evaluated as a

retention rate from the initial fiber physical properties. Note that, for the fiber strength in this case, the strength-elongation of the fiber was measured in the condition of a test length (a distance between chucks) of 250 mm and a tensile rate of 200 mm/minute, and the initial fiber strength and the fiber strength after 5 months were compared with each other to attain a storage strength retention rate on land.

(6) Measurement of Moisture Content

For a moisture content, the amount of moisture was quantified using a Karl Fischer moisture meter (MKC-610) and a moisture vaporizer (APD-611), manufactured by Kyoto Electronics Manufacturing Co., Ltd., in a vaporization condition of 180°C and 20 minutes to obtain the moisture content.

Note that, in Examples described below, the following compounds were used as a "polyester resin" and a "degradation accelerator".

<Polyester Resin>

· PLA1;
polylactic acid "LX-175", manufactured by Total Corbion PLA Bv (Optical Purity; 96% of a L-isomer, a number average molecular weight of 120000)
· PLA2;
polylactic acid "L-130", manufactured by Total Corbion PLA Bv (Optical Purity; 99% of a L-isomer, a number average molecular weight of 100000)

<Degradation Accelerator (Phosphorus-Based Degradation Accelerator)>

(Examples)

· PEP-8;
distearyl pentaerythritol diphosphite (manufactured by ADEKA Corporation, "PEP-8", a phosphorus concentration of 7.6%, a thermal degradation temperature (a temperature with a weight decrease of 5%): 210°C)
· JPH-3800;
a hydrogenated bisphenol A/pentaerythritol phosphite polymer (manufactured by Johoku Chemical Co., Ltd., "JPH-3800", a number average molecular weight of 2000, a thermal degradation temperature (a temperature with a weight decrease of 5%): 180°C)

(Comparative Examples)

· JC-356;
diethyl (3,5-di-t-butyl-4-hydroxybenzyl) phosphonate (manufactured by JOHOKU CHEMICAL CO., LTD., "JC-356")
· JC-228;
diethyl benzyl phosphonate (manufactured by Johoku Chemical Co., Ltd., "JC-228")
· JC-390;
diethyl octadecyl phosphonate (manufactured by Johoku Chemical Co., Ltd., "JC-390")

[Example 1]

A polyester resin (PLA1) with a number average molecular weight of 120000 and a phosphorus-based degradation accelerator (PEP-8) were mixed at 99.0 : 1.0, and subjected to melt kneading using a micro-conical twin screw compounder (manufactured by Thermo Fisher Scientific Inc., "HAAKE MiniCTW") at a setting temperature of 190°C and the rotation speed of 100 rpm for 2 minutes to obtain a resin composition. The obtained resin composition was formed into the shape of powder by frost pulverization, and degradation evaluation in the marine water at a low temperature was performed. Evaluation results were shown in Table 1.

[Examples 2 to 4]

A powder-shaped resin composition was obtained as with Example 1, except that the ratio of the polyester resin (PLA1) and the phosphorus-based degradation accelerator (PEP-8) in Example 1 was changed to a ratio shown in Table 1. Evaluation results were shown together in Table 1.

[Example 5]

A powder-shaped resin composition was obtained as with Example 1, except that the phosphorus-based degradation accelerator (PEP-8) in Example 1 was changed to "JPH-3800". Evaluation results were shown together in Table 1.

[Example 6]

The polyester resin (PLA1) with the number average molecular weight of 120000 was subjected to drying treatment at 100°C for 8 hours to obtain a polyester resin (PLA1) with a moisture content of 200 ppm. The obtained polyester resin (PLA1) and the phosphorus-based degradation accelerator (PEP-8) were mixed at 95.0 : 5.0, and subjected to melt kneading using a micro-conical twin screw compounder (manufactured by Thermo Fisher Scientific Inc., "HAAKE MiniCTW") at a setting temperature of 190°C and the number of rotations of 100 rpm for 2 minutes to obtain a resin composition. An acid value in the resin composition was 108 eq/ton. The obtained resin composition was formed into the shape of powder by frost pulverization, and degradation evaluation in the marine water at a low temperature was performed. A number average molecular weight before the hydrolysis test was 95800, whereas a number average molecular weight 2 months after the hydrolysis test was 17800, and thus, an increase rate in the number of main-chain breaks was 22.9 eq/ton/Month.

[Table 1]

| | Example 1 | Example 2 | Example 3 | Example 4 | Example 5 | Example 6 |
|---|---|---|---|---|---|---|
| Resin (parts by weight)<br>PLA: LX-175 | 99 | 98 | 95 | 90 | 99 | 95 |
| Additive (parts by weight)<br>PEP-8 | 1 | 2 | 5 | 10 | - | 5 |
| JPH-3800 | - | - | - | - | 1 | - |
| Sample Form | Powder | Powder | Powder | Powder | Powder | Powder |
| Number Average Molecular Weight<br>before Hydrolysis Test | 94400 | 91100 | 94200 | 92200 | 107000 | 95800 |
| after 2 Months | 23100 | 21000 | 17000 | 11200 | 17000 | 17800 |
| Increase Rate in Number of Main-Chain Breaks (eq/ton/Month) | 16.3 | 18.3 | 24.1 | 39.2 | 24.7 | 22.9 |

[Example 7]

The polyester resin (PLA1) with the number average molecular weight of 120000 and the phosphorus-based degradation accelerator (PEP-8) were subjected to melt kneading at 95 : 5 using a twin screw extruder (manufactured by TECHNOVEL CORPORATION) at 190°C and 200 rpm to prepare a masterbatch pellet. The number average molecular weight of the obtained masterbatch pellet was 77000, and the phosphorus concentration in the pellet was 0.37% by mass. The polyester resin (PLA1) with the number average molecular weight of 120000 as a base polymer and the obtained masterbatch pellet were pellet blended at 90 : 10, and subjected to melt spinning at 195°C to obtain fiber with a single fiber fineness of 2.9 dtex and 24 filaments, and degradation evaluation in the marine water at a low temperature was performed. Evaluation results were shown in Table 2.

[Examples 8 and 9]

Fiber with a single fiber fineness of 2.9 dtex and 24 filaments was obtained as with Example 6, except that the mixing ratio of the masterbatch pellet and the polyester resin (PLA1) in Example 6 was changed to a ratio shown in Table 1. Evaluation results were shown together in Table 2.

[Examples 10 to 12]

Fiber with a single fiber fineness of 2.9 dtex and 24 filaments was obtained as with Examples 6 to 8, except that the base polymer in Example 6 was changed to a polyester resin (PLA2) with a number average molecular weight of 100000. Evaluation results were shown together in Table 2.

[Table 2]

| | Example 7 | Example 8 | Example 9 | Example 10 | Example 11 | Example 12 |
|---|---|---|---|---|---|---|
| Resin (parts by weight) PLA: LX-175 | 90 | 80 | 70 | - | - | - |
| PLA:L-130 | - | - | - | 90 | 80 | 70 |
| Masterbatch Pellet | 10 | 20 | 30 | 10 | 20 | 30 |
| Sample Form | Fiber | Fiber | Fiber | Fiber | Fiber | Fiber |
| Single Fiber Fineness (dtex) | 2.9 | 2.9 | 2.9 | 2.9 | 2.9 | 2.9 |
| Number Average Molecular Weight before Hydrolysis Test | 84600 | 80500 | 66500 | 74100 | 79100 | 72800 |
| after 2 Months | 31500 | 27300 | 21800 | 38100 | 26600 | 21200 |
| Increase Rate in Number of Main-Chain Breaks (eq/ton/Month) | 10.0 | 12.1 | 15.4 | 6.4 | 12.5 | 16.7 |
| Storage Fiber Strength Initial (cN/dtex) | 2.34 | 2.22 | 2.08 | 2.45 | 2.27 | 2.08 |
| after 5 Months (cN/dtex) | 2.22 | 2.01 | 1.58 | 2.41 | 1.88 | 1.55 |
| Strength Retention Rate (%) | 95 | 91 | 76 | 98 | 83 | 75 |

[Example 13]

The polyester resin (PLA1) with the number average molecular weight of 120000 was subjected to drying treatment at 100°C for 8 hours to obtain a polyester resin (PLA1) with a moisture content of 200 ppm. The obtained polyester resin (PLA1) and the phosphorus-based degradation accelerator (PEP-8) were subjected to melt kneading at 95.0 : 5.0 using a twin screw extruder (manufactured by TECHNOVEL CORPORATION) at 190°C and 200 rpm to prepare a masterbatch pellet. The number average molecular weight of the obtained masterbatch pellet was 88000, and the phosphorus concentration in the pellet was 0.40% by mass. The acid value in the masterbatch was 113 eq/ton.

As a base polymer, a polyester resin (PLA1) with a number average molecular weight of 120000 was separately subjected to drying treatment at 100°C for 8 hours to obtain a polyester resin (PLA1) with a moisture content of 200 ppm. On the other hand, the obtained masterbatch pellet was also subjected to drying treatment at 80°C for 6 hours to obtain a masterbatch pellet with a moisture content of 100 ppm. The base polymer and the masterbatch pellet were pellet blended at 90 : 10, and subjected to melt spinning at 195°C to obtain fiber with a single fiber fineness of 2.9 dtex and 24 filaments. The degradation evaluation of the fiber in the marine water at a low temperature was performed. Evaluation results were shown in Table 3.

[Examples 14 to 16]

Fiber with a single fiber fineness of 2.9 dtex and 24 filaments was obtained as with Example 13, except that the

base polymer of the polyester resin (PLA1) with the number average molecular weight of 120000 in Example 13 was changed to a base polymer with a moisture content of 160 ppm obtained by using the polyester resin (PLA2) with the number average molecular weight of 100000 by drying treatment at 100°C for 8 hours.

Evaluation results were shown together in Table 3.

[Table 3]

| | Example 13 | Example 14 | Example 15 | Example 16 |
|---|---|---|---|---|
| Resin (parts by weight)<br>PLA: LX-175 | 90 | - | - | - |
| PLA:L-130 | - | 90 | 80 | 70 |
| Masterbatch Pellet | 10 | 10 | 20 | 30 |
| Sample Form | Fiber | Fiber | Fiber | Fiber |
| Single Fiber Fineness (dtex) | 2.9 | 2.9 | 2.9 | 2.9 |
| Number Average Molecular Weight<br>before Hydrolysis Test | 86800 | 75000 | 73900 | 73100 |
| after 2 Months | 31500 | 38300 | 26900 | 22100 |
| Increase Rate in Number of Main-Chain Breaks (eq/ton/-Month) | 10.0 | 6.4 | 11.8 | 15.8 |
| Acid Value in Polymer (eq/ton) | 28 | 26 | 33 | 39 |
| Storage Fiber Strength<br>Initial (cN/dtex) | 2.34 | 2.45 | 2.27 | 2.08 |
| after 2 Months (cN/dtex) | 2.36 | 2.55 | 2.04 | 1.77 |
| after 3 Months (cN/dtex) | 2.03 | 2.39 | 1.88 | 1.64 |
| after 4 Months (cN/dtex) | 2.17 | 2.48 | 1.94 | 1.61 |
| after 5 Months (cN/dtex) | 2.25 | 2.42 | 1.92 | 1.57 |
| Strength Retention Rate after 5 Months (%) | 96 | 99 | 85 | 75 |

[Comparative Example 1]

A powder-shaped resin composition was obtained as with Example 1, except that the ratio of the polyester resin (PLA1) was changed to 100% instead of using the phosphorus-based degradation accelerator (PEP-8) in Example 1. Evaluation results were shown together in Table 4.

[Comparative Examples 2 to 4]

A powder-shaped resin composition was obtained as with Example 1, except that the phosphorus-based degradation accelerator (PEP-8) in Example 1 was changed to "JC-356" (Comparative Example 2), "JC-228" (Comparative Example 3), and "JC-390" (Comparative Example 4). Evaluation results were shown together in Table 4.

[Table 4]

| | Comparative Example 1 | Comparative Example 2 | Comparative Example 3 | Comparative Example 4 |
|---|---|---|---|---|
| Resin (parts by weight)<br>PLA: LX-175 | 100 | 99 | 99 | 99 |
| Additive (parts by weight)<br>JC-356 | - | 1 | - | - |
| JC-228 | - | - | 1 | |

(continued)

| | Comparative Example 1 | Comparative Example 2 | Comparative Example 3 | Comparative Example 4 |
|---|---|---|---|---|
| JC-390 | - | - | - | 1 |
| Sample Form | Powder | Powder | Powder | Powder |
| Number Average Molecular Weight before Hydrolysis Test | 108470 | 112300 | 125700 | 129100 |
| after 2 Months | 103207 | 94300 | 102200 | 94700 |
| Increase Rate in Number of Main-Chain Breaks (eq/ton/Month) | 0.2 | 0.8 | 0.9 | 1.4 |
| Acid Value in Polymer (eq/ton) | 15 | 20 | 21 | 18 |

**Claims**

1. A marine degradable polyester resin composition which is a resin composition mainly containing polyester, comprising

   a phosphorus acid ester-based degradation accelerator,
   wherein the phosphorus acid ester-based degradation accelerator is a compound represented by General Formula (I) described below,

   [Chemical Formula 1]

   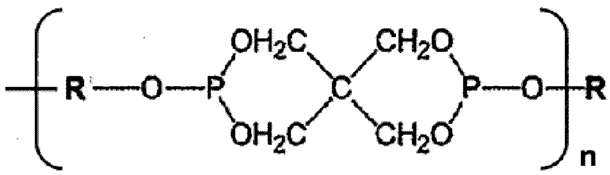

   ... General Formula (I)

   in General Formula (I), R's are an alkyl group or an aryl group, or a hydrogenated bisphenol A skeleton, and may be identical to or different from each other, and n is an integer in a range of 1 to 20.

2. The marine degradable polyester resin composition according to claim 1, wherein the phosphorus acid ester-based degradation accelerator is dialkyl pentaerythritol diphosphite.

3. The marine degradable polyester resin composition according to claim 1, wherein the polyester resin composition is aliphatic polyester.

4. The marine degradable polyester resin composition according to claim 1, wherein the polyester resin composition is poly-L-lactic acid or poly-D-lactic acid with an optical purity of 90% or more.

5. The marine degradable polyester resin composition according to claim 1, wherein a number average molecular weight of the resin composition is 50000 or more.

6. The marine degradable polyester resin composition according to claim 1, wherein an acid value of the resin composition is 300 eq/ton or less.

7. The marine degradable polyester resin composition according to claim 1, wherein a content of the phosphorus acid ester-based degradation accelerator is 0.01 to 5% by mass.

8. A polyester-based resin molded product comprising

the marine degradable polyester resin composition according to any one of claims 1 to 7.

**9.** The polyester-based resin molded product according to claim 8,
wherein a storage strength retention rate on land after 5 months is 60% or more.

**10.** The polyester-based resin molded product according to claim 8,
wherein a shape of the polyester-based resin molded product is fiber or film.

**11.** The polyester-based resin molded product according to claim 10,
wherein an initial strength of the fiber is 1.5 cN/dtex or more.

**12.** A masterbatch of a polyester-based resin composition which is the marine degradable polyester resin composition according to any one of claims 1 to 6,
wherein a content of the phosphorus acid ester-based degradation accelerator is 5 to 20% by mass.

**13.** A method for producing a polyester-based resin molded product, comprising:

adding the masterbatch according to claim 12 to a polyester-based resin; and
performing melt molding.

**14.** The method for producing a polyester-based resin molded product according to claim 13,
wherein a shape of the polyester-based resin molded product is fiber or film.

**INTERNATIONAL SEARCH REPORT**

International application No. **PCT/JP2023/011698**

**A. CLASSIFICATION OF SUBJECT MATTER**

***C08L 67/00***(2006.01)i; ***C08K 5/524***(2006.01)i; ***C08L 67/04***(2006.01)i; ***C08L 85/02***(2006.01)i; ***D01F 6/62***(2006.01)i; ***D01F 6/92***(2006.01)i
FI: C08L67/00 ZAB; C08K5/524 ZBP; C08L67/04; C08L85/02; D01F6/62 305Z; D01F6/92 301B

According to International Patent Classification (IPC) or to both national classification and IPC

**B. FIELDS SEARCHED**

Minimum documentation searched (classification system followed by classification symbols)

C08L67/00; C08K5/524; C08L67/04; C08L85/02; D01F6/62; D01F6/92

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/112479 A1 (KUREHA CORP.) 24 July 2014 (2014-07-24) claims, examples | 1-14 |
| X | WO 2006/118096 A1 (UNITIKA LTD.) 09 November 2006 (2006-11-09) claims, paragraphs [0031], [0055], examples | 1-14 |
| X | JP 2001-49097 A (MITSUI CHEMICALS INC.) 20 February 2001 (2001-02-20) claims, examples | 1-14 |
| X | JP 2005-226183 A (NISSHINBO IND., INC.) 25 August 2005 (2005-08-25) claims, paragraphs [0053], [0054], synthesis examples, examples | 1-3, 5-14 |
| X | JP 2000-345432 A (TOYOBO CO., LTD.) 12 December 2000 (2000-12-12) claims, examples | 1, 3, 5, 7-14 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011698**

| Patent document cited in search report | Publication date (day/month/year) | Patent family member(s) | Publication date (day/month/year) |
|---|---|---|---|
| WO 2014/112479 A1 | 24 July 2014 | US 2015/0361326 A1<br>claims, examples<br>CN 104919022 A | |
| WO 2006/118096 A1 | 09 November 2006 | US 2009/0270530 A1<br>claims, paragraphs [0082], [0106], examples<br>EP 1876205 A1<br>CN 101163743 A<br>KR 10-2008-0000594 A | |
| JP 2001-49097 A | 20 February 2001 | (Family: none) | |
| JP 2005-226183 A | 25 August 2005 | US 2005/0233142 A1<br>claims, paragraphs [0128], [0130], synthesis examples, examples<br>EP 1564316 A1<br>KR 10-2006-0042925 A<br>CN 1654721 A | |
| JP 2000-345432 A | 12 December 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002256142 A
- WO 2018079662 A